# EUROPÄISCHE PATENTSCHRIFT

(11) **EP 1 980 116 B1**
(45) Veröffentlichungstag und Bekanntmachung des Hinweises auf die Patenterteilung: **12.09.2012**
(21) Anmeldenummer: 07702596.3
(22) Anmeldetag: 05.01.2007
(51) Int. Cl.: H04Q 1/02

(54) **NACHRICHTENKABELNETZWERK**
COMMUNICATION CABLE NETWORK
RESEAU CABLE DE MESSAGERIE

(30) Priorität: 31.01.2006 DE 202006001572 U
(43) Veröffentlichungstag der Anmeldung: 15.10.2008
(73) Patentinhaber: CCS Technology, Inc., Wilmington, DE 19803 (US)
(72) Erfinder: HECKENBERGER, Klaus, 10119 Berlin (DE)
(74) Vertreter: Sturm, Christoph
(86) Internationale Anmeldenummer: PCT/EP2007/000059
(87) Internationale Veröffentlichungsnummer: WO 2007/087951

(56) Entgegenhaltungen:
- WO-A-02/058405
- US-A1- 2003 086 561

## Beschreibung

Die Erfindung betrifft ein Nachrichtenkabelnetzwerk nach dem Oberbegriff des Anspruchs 1.

Aus den Produktkatalogen "Zubehör für Kupfer-Nachrichtennetze, Ausgabe 1, Seite 8, Jahr 2000, Coming Cable Systems GmbH & Co. KG" sowie "Anschluss- und Verteilersysteme, Ausgabe 1, Seiten 13 und 14, Jahr 2000, Corning Cable Systems GmbH & Co. KG" ist der prinzipielle Aufbau von Nachrichtenkabelnetzwerken bekannt. Die dort offenbarten Nachrichtenkabelnetzwerke umfassen eine Vermittlungsstelle, die einen Hauptverteiler sowie ein Vermittlungssystem umfasst. Mit dem Hauptverteiler der Vermittlungsstelle sind mehren re Teilnehmer verbunden, nämlich unter Zwischenschaltung mindestens eines Kabelverzweigers, wobei solche Kabelverzweiger auch als Straßenverteiler bezeichnet werden. Zwischen dem oder jedem Kabelverzweiger sowie der Vermittlungsstelle sowie dem oder jedem Kabelverzweiger und den entsprechenden Teilnehmern verlaufen Nachrichtenkabel, nämlich Kupferkabel.

Dann, wenn in Richtung auf einen Teilnehmer sowohl insbesondere niederfrequente Sprachsignale als auch insbesondere hochfrequente Datensignale zu übertragen sind, finden nach dem Stand der Technik in der Vermittlungsstelle xDSL-Splitter Verwendung, die entweder in den Hauptverteiler oder in einen sogenannten DSLAM (Digital Subscriber Line Access Multiplexer) integriert sind. Demnach werden in aus dem Stand der Technik bekannten Nachrichtenkabelnetzwerken Sprachsignale und Datensignale im Bereich der Vermittlungsstelle zu kombinierten Daten-Sprach-Signalen zusammengeführt und/oder kombinierte Daten-Sprach-Signale in Sprachsignale und Datensignale getrennt.

Über die zwischen der Vermittlungsstelle und dem oder jedem Kabelverzweiger sowie über die zwischen dem oder jedem Kabelverzweiger und den entsprechenden Teilnehmern verlaufenden, als Kupferkabel ausgeführten Nachrichtenkabel werden dann kombinierte Daten-Sprach-Signale übertragen. Solche aus dem Stand der Technik bekannten Nachrichtenkabelnetzwerke eignen sich insbesondere dann, wenn die ADSL-Technik zur Signalübertragung verwendet wird. Dann hingegen, wenn zur Erhöhung der Bandbreite sowie zur Erhöhung der Übertragungsfrequenzen zur Signalübertragung eine andere Übertragungstechnik, z.B. die VDSL-Technik, verwendet werden soll, sind die aus dem Stand der Technik bekannten Nachrichtenkabelnetzwerke, wie erläutert im Dokument US 2003/086561, weniger gut geeignet.

Hiervon ausgehend liegt der vorliegenden Erfindung das Problem zu Grunde, ein neuartiges Nachrichtenkabelnetzwerk zu schaffen. Dieses Problem wird dadurch gelöst, dass das eingangs genannte Nachrichtenkabelnetzwerk durch die Merkmale des kennzeichnenden Teils des Anspruchs 1 weitergebildet ist. Erfindungemäß ist das Nachrichtenkabelnetzwerk durch folgende Merkmale gekennzeichnet: a) die zwischen dem Hauptverteiler und dem oder jedem Kabelverzweiger verlaufenden Nachrichtenkabel dienen der Übertragung von Sprachsignalen; b) die zwischen dem oder jedem Kabelverzweiger und den entsprechenden Teilnehmern verlaufenden Nachrichtenkabel dienen der Übertragung von aus Sprachsignalen und Datensignalen kombinierten Daten-Sprach-Signalen; c) im Bereich des oder jedes Kabelverzweigers ist mindestens eine mit dem jeweiligen Kabelverzweiger verbundene Multiplexer-Einheit, insbesondere DSLAM-Einheit, angeordnet, die Bauelemente umfasst, welche dem Zusammenführen von Sprachsignalen und Datensignalen zu kombinierten Daten-Sprach-Signalen und/oder dem Trennen kombinierter Daten-Sprach-Signale in Sprachsignale und Datensignale dienen; d) die oder jede im Bereich eines Kabelverzweigers angeordnete Multiplexer-Einheit, insbesondere DSLAM-Einheit, ist mit mindestens einem weiteren Nachrichtenkabel verbunden, welches der Übertragung von Datensignalen zu der bzw. von der jeweiligen Multiplexer-Einheit, insbesondere DSLAM-Einheit, dient.

Im Sinne der hier vorliegenden Erfindung wird vorgeschlagen, Baugruppen eines DSLAM, die nach dem Stand der Technik in der Vermittlungsstelle mit großem Abstand zu den Teilnehmern angeordnet sind, in Form von sogenannten Multiplexer-Einheiten im Bereich der jeweiligen Kabelverzweiger und demnach in der Nähe der Teilnehmer anzuordnen. Die zwischen den Kabelverzweigem und der Vermittlungsstelle verlaufenden Nachrichtenkabel dienen dann vorzugsweise ausschließlich der Übertragung von insbesondere niederfrequenten Sprachsignalen. Erst entlang der Nachrichtenkabel, die zwischen den Kabelverzweigern und den Teilnehmern verlaufen, werden gleichzeitig insbesondere niederfrequente Sprachsignale sowie insbesondere hochfrequente Datensignale übertragen. Das Zusammenführen der Sprachsignale sowie der Datensignale zu kombinierten Daten-Sprach-Signalen sowie das Trennen von kombinierten Daten-Sprach-Signalen in Sprachsignale und Datensignale erfolgt in der im Bereich des jeweiligen Kabelverzweigers angeordneten Multiplexer-Einheit.

Vorzugsweise verlaufen zwischen dem Hauptverteiler und dem oder jedem Kabelverzweiger sowie zwischen dem oder jedem Kabelverzweiger und den entsprechenden Teilnehmern als Nachrichtenkabel Kupferkabel, wobei das oder jedes weitere Nachrichtenkabel, welches der Übertragung hochfrequenter Datensignale zu der bzw. von der jeweiligen Multiplexer-Einheit dient, als Lichtwellenleiterkabel ausgebildet ist.

Nach einer vorteilhaften Weiterbildung ist die oder jede im Bereich eines Kabelverzweigers angeordnete Muttipiexer-Einheit unterirdisch installiert sowie modular ausgeführt, wobei die oder jede im Bereich eines Kabelverzweigers angeordnete Multiplexer-Einheit mit Kabeln vorkonfektioniert sowie abgedichtet ist, und wobei der oder jeder Multiplexer-Einheit zugeordnete, vorkonfektionierte Kabel über Plug-and-Play-Verbinder mit einer der jeweiligen Multiplexer-Einheit zugeordneten Kabelmuffe und einer der jeweiligen Multiplexer-Einheit zugeordneten Spannungsversorgungseinheit koppelbar bzw. in dieselbe einführbar sind.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: einen Ausschnitt aus einem aus dem Stand der Technik bekannten Nachrichtenkabelnetzwerk,
- Fig. 2:: einen Ausschnitt aus einem erfindungsgemäßen Nachrichtenkabelnetzwerk, und
- Fig. 3:: einen Ausschnitt aus einem weiteren erfindungsgemäßen Nachrichtenkabelnetzwerk.

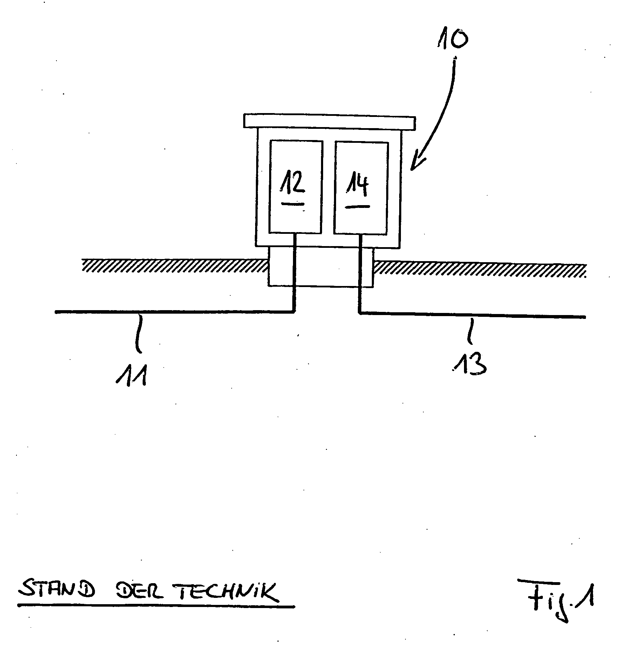

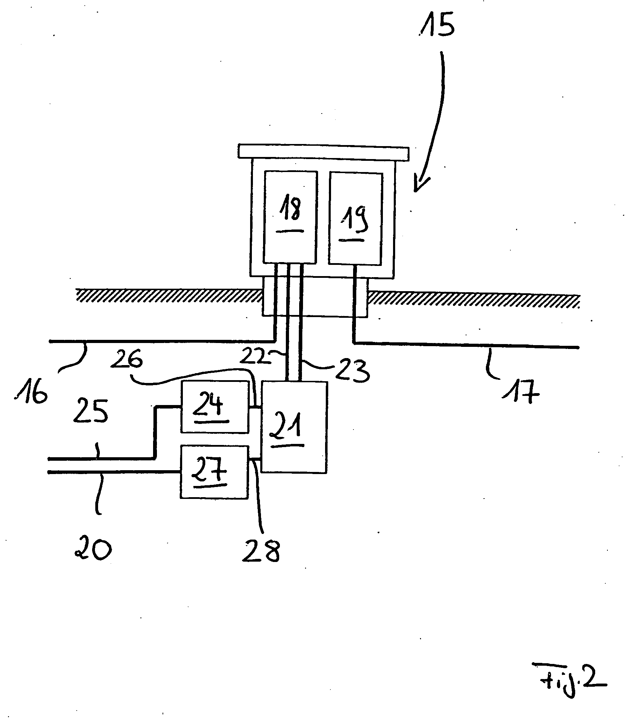

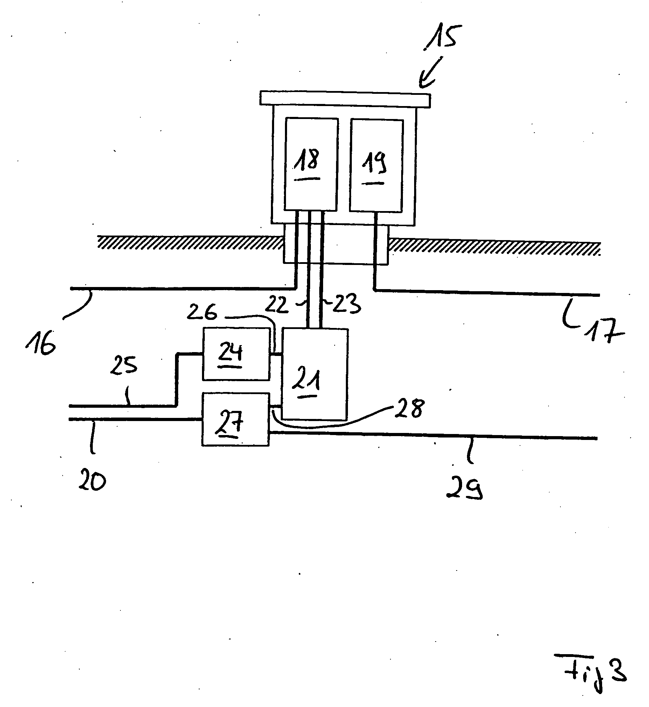

Bevor nachfolgend unter Bezugnahme auf Fig. 2 und 3 Ausführungsbeispiele eines erfindungsgemäßen Nachrichtenkabelnetzwerks beschrieben werden, soll vorab unter Bezugnahme auf Fig. 1 auf den Stand der Technik eingegangen werden.

Fig. 1 zeigt einen Ausschnitt eines aus dem Stand der Technik bekannten Nachrichtenkabelnetzwerks im Bereich eines überirdisch angeordneten Kabelverzweigers 10, wobei solche Kabelverzweiger auch als Straßenverteiler bezeichnet werden. Zwischen dem Kabelverzweiger 10 und einer nicht-dargestellten Vermittlungsstelle des Nachrichtenkabelnetzwerks verlaufen Nachrichtenkabel 11, die als Kupferkabel ausgeführt sind. Die zwischen der nicht-dargestellten Vermittlungsstelle und dem Kabelverzweiger 10 verlaufenden Nachrichtenkabel sind im Bereich der Vermittlungsstelle mit einem Hauptverteiler und im Bereich des Kabelverzweigers 10 mit einer amtseitigen Baugruppe 12 verbunden. Weiterhin ist der Kabelverzweiger 10 der Fig. 1 über Nachrichtenkabel 13 mit ebenfalls nicht-dargestellten Teilnehmern verbunden, wobei diese Nachrichtenkabel 13 ebenfalls als Kupferkabel ausgeführt sind. Die Nachrichtenkabel 13 sind demnach einerseits mit den entsprechenden Teilnehmern und andererseits mit einer teilnehmerseitigen Baugruppe 14 des Kabelverzweigers 10 verbunden.

Die amtseitige Baugruppe 12 des Kabelverzweigers 10 wird auch als Feeding-Baugruppe des Kabelverzweigers, die teilnehmerseitige Baugruppe 14 wird auch als Distribution-Baugruppe des Kabelverzweigers bezeichnet.

Sollen mit einem solchen Nachrichtenkabelnetzwerk gemäß Fig. 1 sowohl insbesondere niederfrequente Sprachsignale als auch insbesondere hochfrequente Datensignale übertragen werden, so erfolgt dies dadurch, dass im Bereich der nicht-dargestellten Vermittlungsstelle die Datensignale sowie die Sprach-signale zu kombinierten Daten-Sprach-Signalen zusammengeführt und anschließend über die Nachrichtenkabel 11, 13 in Richtung auf die Teilnehmer übertragen werden. Das Trennen kombinierter Daten-Sprach-Signale in Sprachsignale sowie Datensignale erfolgt ebenfalls im Bereich der Vermittlungsstelle. Neben dem bereits erwähnten Hauptverteiler verfügt die Vermittlungsstelle über ein Vermittlungssystem sowie einen DSLAM, wobei der DSLAM eine Schnittstelle zwischen zu der Vermittlungsstelle geführten Lichtwellenleiterkabeln und Kupferkabeln bildet. Das Zusammenführen der Sprach-signale und Datensignale zu kombinierten Daten-Sprach-Signalen sowie das Trennen derselben erfolgt über xDSL-Splitter, die nach dem Stand der Technik entweder in den Hauptverteiler der Vermittlungsstelle oder in den DSLAM derselben integriert sind.

Fig. 2 zeigt einen Ausschnitt aus einem erfindungsgemäßen Nachrichtenkabelnetzwerk wiederum im Bereich eines Kabelverzweigers 15, wobei der Kabelverzweiger 15 wiederum über Nachrichtenkabel 16 mit einer nicht-dargestellten Vermittlungsstelle sowie über Nachrichtenkabel 17 mit ebenfalls nicht-dargestellten Teilnehmern verbunden ist. Die zwischen der Vermittlungsstelle und dem Kabelverzweiger verlaufenden Nachrichtenkabel 16 sind mit einer amtseitigen Baugruppe bzw. Feeding-Baugruppe 18 des Kabelverzweigers 15 verbunden, die zwischen dem Kabelverzweiger 15 und den Teilnehmern verlaufenden Nachrichtenkabel 17 sind mit einer teilnehmerseitigen Baugruppe bzw. Distribution-Baugruppe 19 des Kabelverzweigers 15 verknüpft.

Bei den Nachrichtenkabeln 16 und 17, die zwischen dem Kabelverzweiger 15 und der Vermittlungsstelle sowie zwischen dem Kabelverzweiger 15 und den Teilnehmer verlaufen, sind dabei wiederum als Kupferkabel ausgeführt. Insoweit stimmt das Nachrichtenkabelnetzwerk der Fig. 2 mit dem Nachrichtenkabelnetzwerk der Fig. 1 überein.

Im Sinne der hier vorliegenden Erfindung dienen die zwischen dem Hauptverteiler der nicht-dargestellten Vermittlungsstelle und dem Kabelverzweiger 15 verlaufenden Nachrichtenkabel 16 der Übertragung von insbesondere niederfrequenten Sprachsignalen. Ebenfalls zu übertragende, insbesondere hochfrequenten Datensignale werden mit Hilfe eines als Lichtwellenleiterkabel ausgebildeten Nachrichtenkabels 20 mindestens einer im Bereich des Kabelverzweigers 15 positionierten Multiplexer-Einheit 21 zugeführt, die nachfolgend als DSLAM-Einheit bezeichnet wird. Die DSLAM-Einheit 21 ist ebenfalls mit dem Kabelverzweiger 15 verbunden, nämlich mit der amtseitigen Baugruppe 18 des Kabelverzweigers 15. Die oder jede DSLAM-Einheit 21 stellt eine Schnittstelle zwischen dem auf Lichtwellenleiterkabeln beruhenden Teil des Nachrichtenkabelnetzwerks und dem auf Kupferkabeln beruhenden Teil des Nachrichtenkabelnetzwerks dar, wobei die DSLAM-Einheit 21 Bauelemente umfasst, die dem Zusammenführen der Sprachsignale und Datensignale zu kombinierten Daten-Sprach-Signalen sowie dem Trennen kombinierter Daten-Sprach-Signale in Sprachsignale und Datensignale dienen. Bei diesen Baugruppen handelt es sich insbesondere um Splitter.

Gemäß Fig. 2 ist die DSLAM-Einheit 21 über zwei Kabel 22 und 23 mit dem Kabelverzweiger 15 verbunden, wobei ein erstes Kabel 22 der Übertragung der Sprachsignale zwischen dem Kabelverzweiger 15 und der DSLAM-Einheit 21 dient, und wobei ein zweites Kabel 23 der Übertragung kombinierter Daten-Sprach-Signale zwischen dem Kabelverzweiger 15 und der DSLAM-Einheit 21 dient. Die beiden Kabel, die als Kupferkabel ausgeführt sind, greifen jeweils an der amtseitigen Baugruppe 18 des Kabelverzweigers 15 an.

Bei dem erfindungsgemäßen Nachrichtenkabelnetzwerk werden demnach Datensignale sowie Sprachsignale erst im Bereich einer DSLAM-Einheit 21, die im Bereich eines Kabelverzweigers 15 positioniert ist, zusammengeführt, um dann als kombiniertes Daten-Sprach-Signal zwischen dem Kabelverzweiger 15 und den an den Kabelverzweiger angeschlossenen Teilnehmern übertragen zu werden.

Gemäß Fig. 2 werden die insbesondere hochfrequenten Datensignale über das Lichtwellenleiterkabel 20 der im Bereich des Kabelverzweigers 15 angeordneten DSLAM-Einheit 21 zugeführt. Die insbesondere niederfrequenten Sprach-signale werden über Kupferkabel 16 und 22, die zwischen einer Vermittlungsstelle und dem Kabelverzweiger 15 bzw. zwischen dem Kabelverzweiger 15 und der DSLAM-Einheit 21 verlaufen, der im Bereich des Kabelverzweigers 15 angeordneten DSLAM-Einheit 21 zugeführt. Die oder jede DSLAM-Einheit 21 enthält passive sowie aktive Bauelemente, wobei zur Stromversorgung der aktiven Bauelemente der in Fig. 2 dargestellten DSLAM-Einheit 21 eine Spannungsversorgungseinheit 24 zugeordnet ist. Bei der Spannungsversorgungseinheit 24 handelt es sich insbesondere um einen Transformator, welcher die über ein Spannungsversorgungskabel 25 bereitgestellte Spannung auf ein Potential transformiert, welches auf die aktiven Bauelemente der DSLAM-Einheit 21 angepasst ist. Gemäß Fig. 2 ist die Spannungsversorgungseinheit 24 der DSLAM-Einheit 21 über ein der Spannungsübertragung bzw. Stromübertragung dienendes Kabel 26 verbunden.

Die passiven sowie aktiven Bauelemente der DSLAM-Einheit 21 bilden insbesondere xDSL-Splitter, vorzugsweise VDSL-Splitter, die dem Zusammenführen der Sprachsignale und der Datensignale zu kombinierten Daten-Sprach-Signalen sowie dem Trennen kombinierter Daten-Sprach-Signale in Sprachsignale und Datensignale dienen.

Zwischen der in Fig. 2 dargestellten DSLAM-Einheit 21 und dem der Übertragung der Datensignale dienende Lichtwellenleiterkabel 20 ist eine Kabelmuffe 27 geschaltet, die dem Aufbau von Verbindungsstellen zwischen dem Lichtwellenleiterkabel 20 und einem zwischen der Kabelmuffe 27 und der DSLAM-Einheit 21 verlaufenden, ebenfalls als Lichtwellenleiterkabel ausgebildeten Kabel 28 dient. Bei der Kabelmuffe 27 kann es sich um eine vorkonfektionierte Kabelmuffe handeln, die auch als Multiport bezeichnet wird.

Im Sinne der hier vorliegenden Erfindung ist die in Fig. 2 dargestellte DSLAM-Einheit 21 unterirdisch installiert. Ebenso sind die Spannungsversorgungseinheit 24 sowie die Kabelmuffe 27, die über die Kabel 26 und 28 mit der DSLAM-Einheit 21 verbunden sind, unterirdisch installiert. Die unterirdische Installation der DSLAM-Einheit 21, der Spannungsversorgungseinheit 24 sowie der Kabelmuffe 27 verfügt über den Vorteil, dass die entsprechenden Baugruppen im Erdreich unsichtbar installiert sind, so dass sich das Straßenbild nicht verändert. Weiterhin verfügen Telekommunikationsgesellschaften üblicherweise über unterirdische Wegerechte, so dass bei einer unterirdischen Installation der Baugruppen keine langwierigen Genehmigungsverfahren, wie sie bei überirdischen Installationen üblich sind, durchlaufen werden müssen. Durch eine unterirdische Installation sind die obigen Baugruppen weiterhin durch das Erdreich geschützt, so dass z. B. durch Verkehrsunfälle und Vandalismus verursachte Beeinträchtigungen dieser Baugruppen ausgeschlossen werden.

Nach einer vorteilhaften Weiterbildung der hier vorliegenden Erfindung ist die in Fig. 2 dargestellte DSLAM-Einheit 21 mit den Kabeln 22 und 23, welche die unterirdisch installierte DSLAM-Einheit mit dem überirdisch installierten Kabelverzweiger verbinden, sowie mit den Kabeln 26 und 28, welche die unterirdisch installierte DSLAM-Einheit mit der unterirdisch installierten Spannungsversorgungseinheit 24 sowie der ebenfalls unterirdisch installierten Kabelmuffe 27 verbinden, vorkonfektioniert. In den Bereichen, in denen die vorkonfektionierten Kabel 22, 23, 26 und 28 in die DSLAM-Einheit 21 hineinverlaufen bzw. aus derselben hinausverlaufen, ist eine entsprechende Abdichtung vorgesehen.

An der DSLAM-Einheit 21 gegenüberliegenden Enden der Kabel 22, 23, 26 und 28 sind dieselben über Plug-and-Play-Verbinder mit der Baugruppe koppelbar, mit welcher das jeweilige Kabel zu verbinden ist, also im Bereich der Kabel 22 und 23 mit der Feeding-Baugruppe 18 des Kabelverzweigers 15, im Bereich des Kabels 26 mit der Spannungsversorgungseinheit 24 und im Bereich des Kabels 28 mit der Kabelmuffe 27.

Die oder jede im Bereich eines Kabelverzweigers 15 unterirdisch installierte DSLAM-Einheit 21 ist vorzugsweise derart modular ausgebildet, dass dieselbe für eine Teilmenge der Teilnehmer, die mit dem der DSLAM-Einheit 21 zugeordneten Kabelverzweiger 15 verbunden sind, aktive Bauelemente enthält. Hierdurch ist es möglich, Nachrichtenkabelnetzwerke Schritt für Schritt durch nacheinander zu installierende DSLAM-Einheiten 21 zu erweitern, ohne dass auf bereits unterirdisch installierte DSLAM-Einheiten zugegriffen werden muss.

Dabei ist vorzugsweise allen DSLAM-Einheiten 21, die im Bereich eines Kabelverzweigers 15 unterirdisch installiert sind, eine gemeinsame Kabelmuffe 27 sowie eine gemeinsame Spannungsversorgungseinheit 24 zugeordnet. Die Modularisierung der DSLAM-Einheiten 21 in Bezug auf eine Teilmenge der Teilnehmer, die mit dem der jeweiligen DSLAM-Einheit 21 zugeordneten Kabelverzweiger 15 verbunden sind, verfügt über den Vorteil, dass die in einer DSLAM-Einheit 21 entstehende Wärme beschränkt wird, so dass keine Gefahr von Überhitzungen der Bauelemente innerhalb der modularisierten DSLAM-Einheiten 21 besteht.

Fig. 3 zeigt eine bevorzugte Weiterbildung des Nachrichtenkabelnetzwerks gemäß Fig. 2, wobei in Fig. 3 die der gezeigten DSLAM-Einheit 21 zugeordnete Kabelmuffe 27 nicht nur der Ausbildung von Verbindungsstellen zwischen den Lichtwellenleiterkabeln 20 und 28 dient, sondern vielmehr ebenfalls dem Aufbau von Abzweigstellen, um Lichtwellenleiterkabel 29 einen Teilnehmer unmittelbar zuzuführen.

Hierdurch können einem Teilnehmer neben xDSL-Diensten über Kupferleitungen auch unmittelbar Dienste über optische Leitungen bereitgestellt werden. Dann, wenn im Ausführungsbeispiel der Fig. 3 alle Teilnehmer über Lichtwellenleiterkabel 29 unmittelbar an den optischen Teil des Nachrichtenkabelnetzwerks angeschlossen sind, können alle kupferseitigen Baugruppen des Nachrichtenkabelnetzwerks entfernt werden, nämlich u.a. der Kabelverzweiger 15 sowie die oder jede dem Kabelverzweiger 15 zugeordnete DSLAM-Einheit 21, und zwar ohne die Notwendigkeit einer Unterbrechung von einem Teilnehmer angebotenen Diensten.

### Bezugszeichenliste

- 10: Kabelverzweiger
- 11: Nachrichtenkabel/Kupferkabel
- 12: amtseitige Baugruppe/Feeding-Baugruppe
- 13: Nachrichtenkabel/Kupferkabel
- 14: teilnehmerseitige Baugruppe/Distribution-Baugruppe
- 15: Kabelverzweiger
- 16: Nachrichtenkabel/Kupferkabel
- 17: Nachrichtenkabel/Kupferkabel
- 18: amtseitige Baugruppe/Feeding-Baugruppe
- 19: teilnehmerseitige Baugruppe/Distribution-Baugruppe
- 20: Nachrichtenkabel/Lichtwellenleiterkabel
- 21: Multiplexer-Einheit/DSLAM-Einheit
- 22: Nachrichtenkabel/Kupferkabel
- 23: chrichtenkabel/Kupferkabel
- 24: Spannungsversorgungseinheit
- 25: Spannungsversorgungskabel
- 26: Spannungsversorgungskabel
- 27: Kabelmuffe
- 28: Nachrichtenkabel/Lichtwellenleiterkabel
- 29: Nachrichtenkabel/Lichtwellenleiterkabel

## Patentansprüche

1. Nachrichtenkabelnetzwerk zur Übertragung von insbesondere hochfrequenten Datensignalen und insbesondere niederfrequenten Sprach-signalen, mit einer einen Hauptverteiler und ein Vermittlungssystem umfassenden Vermittlungsstelle, mit mehreren mit dem Hauptverteiler verbundenen Teilnehmern, und mit mindestens einem Kabelverzweiger, der zwischen mehrere Teilnehmer und den Hauptverteiler der Vermittlungsstelle geschaltet sind, wobei einerseits zwischen dem Hauptverteiler und dem oder jedem Kabelverzweiger sowie anderseits zwischen dem oder jedem Kabelverzweiger und den entsprechenden Teilnehmern Nachrichtenkabel verlaufen, wobei die zwischen dem Hauptverteiler und dem oder jedem Kabelverzweiger (15) verlaufenden Nachrichtenkabel (16) der Übertragung von Sprachsignalen dienen, wobei die zwischen dem oder jedem Kabelverzweiger (15) und den entsprechenden Teilnehmern verlaufenden Nachrichtenkabel (17) der Übertragung von aus Sprachsignalen und Datensignalen kombinierten Daten-Sprach-Signalen dienen; wobei im Bereich des oder jedes Kabelverzweigers (15) mindestens eine mit dem jeweiligen Kabelverzweiger verbundene Multiplexer-Einheit, insbesondere DSLAM-Einheit (21), angeordnet ist, die Bauelemente umfasst, welche dem Zusammenführen von Sprachsignalen und Datensignalen zu kombinierten Daten-Sprach-Signalen und/oder dem Trennen kombinierter Daten-Sprach-Signale in Sprachsignale und Datensignale dienen; und wobei die oder jede im Bereich eines Kabelverzweigers (15) angeordnete Multiplexer-Einheit, insbesondere DSLAM-Einheit (21), mit mindestens einem weiteren Nachrichtenkabel (20) verbunden ist, welches der Übertragung von Datensignalen zu der bzw. von der jeweiligen Multiplexer-Einheit, insbesondere DSLAM-Einheit (21), dient, **dadurch gekennzeichnet, dass** die oder jede im Bereich eines Kabelverzweigers (15) angeordnete Multiplexer-Einheit (21) unterirdisch installiert ist.

2. Nachrichtenkabelnetzwerk nach Anspruch 1, **dadurch gekennzeichnet, dass** zwischen dem Hauptverteiler und dem oder jedem Kabelverzweiger (15) sowie zwischen dem oder jedem Kabelverzweiger (15) und den entsprechenden Teilnehmern als Nachrichtenkabel (16, 17) Kupferkabelkabel verlaufen, und dass das oder jedes weitere Nachrichtenkabel (20), welches der Übertragung von Datensignalen zu der bzw. von der jeweiligen Multiplexer-Einheit (21) dient, als Lichtwellenleiterkabel ausgebildet ist.

3. Nachrichtenkabelnetzwerk nach Anspruch 1 oder 2, **dadurch gekennzeichnet, dass** die oder jede im Bereich eines Kabelverzweigers (15) angeordnete Multiplexer-Einheit (21) mit einer Spannungsversorgungseinheit (24) gekoppelt ist.

4. Nachrichtenkabelnetzwerk nach Anspruch 3, **dadurch gekennzeichnet, dass** die mit der Multiplexer-Einheit (21) gekoppelte Spannungsversorgungseinheit (24) unterirdisch installiert ist.

5. Nachrichtenkabelnetzwerk nach einem oder mehreren der Ansprüche 1 bis 4, **dadurch gekennzeichnet, dass** zwischen die oder jede im Bereich eines Kabelverzweigers (15) angeordnete Multiplexer-Einheit (21) und das oder jedes der Übertragung von Datensignalen zu der bzw. von der jeweiligen Multiplexer-Einheit (21) dienende Nachrichtenkabel (20) eine Kabelmuffe (27) geschaltet ist, die dem Aufbau von Verbindungsstellen zwischen dem Nachrichtenkabel (20) und einem zwischen der Multiplexer-Einheit (21) und der Kabelmuffe (27) verlaufenden Kabel (28) dient.

6. Nachrichtenkabelnetzwerk nach Anspruch 5, **dadurch gekennzeichnet, dass** ausgehend von der Kabelmuffe (27) Abzweigstellen zu Teilnehmern ausbildbar sind.

7. Nachrichtenkabelnetzwerk nach Anspruch 6, **dadurch gekennzeichnet, dass** hierdurch einem Teilnehmer unmittelbar Lichtwellenleiterkabel (29) zuführbar sind.

8. Nachrichtenkabelnetzwerk nach Anspruche 5, 6 oder 7, **dadurch gekennzeichnet, dass** die mit der Multiplexer-Einheit (21) gekoppelte Kabelmuffe (27) unterirdisch installiert ist.

9. Nachrichtenkabelnetzwerk nach einem oder mehreren der Ansprüche 1 bis 8, **dadurch gekennzeichnet, dass** die oder jede im Bereich eines Kabelverzweigers (15) angeordnete Multiplexer-Einheit (21) mit Kabeln (22, 23, 26, 28) vorkonfektioniert sowie abgedichtet ist.

10. Nachrichtenkabelnetzwerk nach Anspruch 9, **dadurch gekennzeichnet, dass** die der oder jeder Multiplexer-Einheit (21) zugeordneten, vorkonfektionierten Kabel (22, 23, 26, 28) über Plug-and-Play-Verbinder mit einer der Multiplexer-Einheit (21) zugeordneten Kabelmuffe (27) und/oder mit einer der Multiplexer-Einheit (21) zugeordneten Spannungsversorgungseinheit (24) und/oder mit einem der Multiplexer-Einheit (21) zugeordneten Kabelverzweiger (15) koppelbar bzw. in dieselbe einführbar sind.

11. Nachrichtenkabelnetzwerk nach einem oder mehreren der Ansprüche 1 bis 10, **dadurch gekennzeichnet, dass** die oder jede Multiplexer-Einheit (21) modular ausgebildet ist und für eine Teilmenge der Teilnehmer, die mit dem der Multiplexer-Einheit (21) zugeordneten Kabelverzweiger (15) verbunden sind, aktive Bauelemente enthält.

12. Nachrichtenkabelnetzwerk nach Anspruch 11, **dadurch gekennzeichnet, dass** mit jeder im Bereich eines Kabelverzweigers (15) angeordneten, modular ausgebildeten Multiplexer-Einheit (21) eine einzige Spannungsversorgungseinheit (24) und eine einzige Kabelmuffe (27) zusammenwirkt.

13. Nachrichtenkabelnetzwerk nach einem oder mehreren der Ansprüche 1 bis 12, **dadurch gekennzeichnet, dass** die oder jede Multiplexer-Einheit (21) VDSL-Splitter enthält.

## Claims

1. Communication cable network for transmission of, in particular, radio-frequency data signals and in particular audio-frequency voice signals, having a switching center which comprises a main distribution board and a switching system, having a plurality of subscribers connected to the main distribution board, and having at least one cable junction, which is or are connected between a plurality of subscribers and the main distribution board of the switching center, with communication cables running on the one hand between the main distribution board and the or each cable junction and on the other hand between the or each cable junction and the corresponding subscribers,
with the communication cables (16) which run between the main distribution board and the or each cable junction (15) being used for transmission of voice signals, with the communication cables (17) which run between the or each cable junction (15) and the corresponding subscribers being used for transmission of data/voice signals which are combined from voice signals and data signals, with at least one multiplexer unit, in particular a DSLAM unit (21) being arranged in the area of the or each cable junction (15), being connected to the respective cable junction and comprising components which are used to combine voice signals and data signals to form combined data/voice signals, and/or for separation of combined data/voice signals to form voice signals and data signals, and with the or each multiplexer unit, in particular a DSLAM unit (21), which is arranged in the area of a cable junction (15) being connected to at least one further communication cable (20) which is used for transmission of data signals to and/or from the respective multiplexer unit, in particular a DSLAM unit (21), **characterized in that** the or each multiplexer unit (21) which is arranged in the area of a cable junction (15) is installed underground.

2. Communication cable network according to Claim 1, **characterized in that** copper cables run between the main distribution board and the or each cable junction (15) and between the or each cable junction (15) and the corresponding subscribers as communication cables (16, 17), and **in that** the or each further communication cable (20), which is used for transmission of data signals to and from the respective multiplexer unit (21), is in the form of an optical waveguide cable.

3. Communication cable network according to Claim 1 or 2, **characterized in that** the or each multiplexer unit (21) which is arranged in the area of a cable junction (15) is coupled to a voltage supply unit (24).

4. Communication cable network according to Claim 3, **characterized in that** the voltage supply unit (24) which is coupled to the multiplexer unit (21) is installed underground.

5. Communication cable network according to one or more of Claims 1 to 4, **characterized in that** a cable sleeve (27) is connected between the or each multiplexer unit (21) which is arranged in the area of a cable junction (15) and the or each communication cable (20) which is used for transmission of data signals to and/or from the respective multiplexer unit (21), and this cable sleeve (27) is used to set up connection points between the communication cable (20) and a cable (28) which runs between the multiplexer unit (21) and the cable sleeve (27).

6. Communication cable network according to Claim 5, **characterized in that** junction points to subscribers can be formed from the cable sleeve (27).

7. Communication cable network according to Claim 6, **characterized in that** the network can be used to supply optical waveguide cables (29) directly to a subscriber.

8. Communication cable network according to Claim 5, 6 or 7, **characterized in that** the cable sleeve (27) which is coupled to the multiplexer unit (21) is installed underground.

9. Communication cable network according to one or more of Claims 1 to 8, **characterized in that** the or each multiplexer unit (21) which is arranged in the area of a cable junction (15) is prefabricated with cables (22, 23, 26, 28) and is sealed.

10. Communication cable network according to Claim 9, **characterized in that** the prefabricated cables (22, 23, 26, 28) which are associated with the or each multiplexer unit (21) can be coupled to and/or can be introduced into a cable sleeve (27) which is associated with the multiplexer unit (21), can be coupled to or can be introduced into a voltage supply unit (24) which is associated with the multiplexer unit (21) and can be coupled to or introduced into a cable junction (15) which is associated with the multiplexer unit (21), via plug-and-play connectors.

11. Communication cable network according to one or more of Claims 1 to 10, **characterized in that** the or each multiplexer unit (21) is of modular design and contains active components for a subset of the subscribers which are connected to the cable junction (15) associated with the multiplexer unit (21).

12. Communication cable network according to Claim 11, **characterized in that** a single voltage supply unit (24) and a single cable sleeve (27) interacts with each modular multiplexer unit (21) which is arranged in the area of a cable junction (15).

13. Communication cable network according to one or more of Claims 1 to 12, **characterized in that** the or each multiplexer unit (21) contains a VDSL splitter or VDSL splitters.

## Revendications

1. Réseau de câbles de communications destiné à transmettre en particulier des signaux de données à haute fréquence et en particulier des signaux vocaux à basse fréquence, comportant un répartiteur principal et un centre de commutation comprenant un système de commutation ayant une pluralité d'abonnés connectés au répartiteur principal, et comportant au moins une armoire extérieure, qui est connectée entre une pluralité d'abonnés et le répartiteur principal du centre de commutation, dans lequel des câbles de communication s'étendent d'une part entre le répartiteur principal et la ou chaque armoire extérieure ainsi que d'autre part entre la ou chaque armoire extérieure et les abonnés correspondants, dans lequel les câbles de communication (16) s'étendant entre le répartiteur principal et la ou chaque armoire extérieure (15) sont destinés à transmettre des signaux vocaux, dans lequel les câbles de communication (17) s'étendant entre la ou chaque armoire extérieure (15) et les abonnés correspondants sont destinés à transmettre des signaux de données-voix combinés à partir de signaux vocaux et de signaux de données ; dans lequel, dans la région de la ou de chaque armoire extérieure (15) se trouve au moins une unité de multiplexage connectée au répartiteur respectif, notamment une unité DSLAM (21) qui comprend des éléments constitutifs destinés à concentrer des signaux vocaux et des signaux de données en des signaux de données-voix combinés et/ou à séparer les signaux de données-voix combinés en des signaux vocaux et des signaux de données ; et dans lequel la ou chaque unité de multiplexage disposée dans la région d'une armoire extérieure (15), notamment l'unité DSLAM (21), est connectée à au moins un câble de communication supplémentaire (20) qui est destiné à transmettre des signaux de données vers ou depuis l'unité de multiplexage respective, notamment l'unité DSLAM (21), **caractérisé en ce que** la ou chaque unité de multiplexage (21) disposée dans la région d'une armoire extérieure (15) est installée de manière enterrée.

2. Réseau de câbles de communication selon la revendication 1, **caractérisé en ce que** des câbles de cuivre s'étendent entre le répartiteur principal et la ou chaque armoire extérieure (15) ainsi qu'entre la ou chaque armoire extérieure (15) et les abonnés correspondants en tant que câbles de communication (16, 17), et **en ce que** le ou chaque câble de communication supplémentaire (20) qui est destiné à transmettre des signaux de données vers ou depuis l'unité de multiplexage respective (21) est réalisé sous la forme d'un câble à fibres optiques.

3. Réseau de câbles de communication selon la revendication 1 ou 2, **caractérisé en ce que** la ou chaque unité de multiplexage (21) disposée dans la région d'une armoire extérieure (15) est reliée à une unité d'alimentation électrique (24).

4. Réseau de câbles de communication selon la revendication 3, **caractérisé en ce que** l'unité d'alimentation électrique (24) reliée à l'unité de multiplexage (21) est installée de manière enterrée.

5. Réseau de câbles de communication selon l'une ou plusieurs des revendications 1 à 4, **caractérisé en ce qu'**un manchon de câble (27) destiné à former des points de connexion entre le câble de communication (20) et un câble (28) s'étendant entre l'unité de multiplexage (21) et le manchon de câble (27) est connecté entre la ou chaque unité de multiplexage (21) disposée dans la région d'une armoire extérieure (15) et le ou chaque câble de communication (20) destiné à transmettre des signaux de données vers ou depuis l'unité de multiplexage (21) respective.

6. Réseau de câbles de communication selon la revendication 5, **caractérisé en ce que** des points de dérivation vers les abonnés peuvent être formés à partir du manchon de câble (27).

7. Réseau de câbles de communication selon la revendication 6, **caractérisé en ce qu'**il permet d'acheminer directement des câbles à fibres optiques (29) à un abonné.

8. Réseau de câbles de communication selon les revendications 5, 6 ou 7, **caractérisé en ce que** le manchon de câble (27) relié à l'unité de multiplexage (21) est installé de manière enterrée.

9. Réseau de câbles de communication selon l'une ou plusieurs des revendications 1 à 8, **caractérisé en ce que** la ou chaque unité de multiplexage (21) disposée dans la région d'une armoire extérieure (15) est pré-assemblée et scellée avec des câbles (22, 23, 26, 28).

10. Réseau de câbles de communication selon la revendication 9, **caractérisé en ce que** le ou chaque câble (22, 23, 26, 28) pré-assemblé associé à la ou chaque unité de multiplexage (21) peut être relié par l'intermédiaire d'un connecteur de type plug-and-play à un manchon de câble (27) associé à l'unité de multiplexage (21) et/ou à une unité d'alimentation électrique (24) associée à l'unité de multiplexage (21) et/ou à l'armoire extérieure (15) associée à l'unité de multiplexage (21) ou être introduit dans ceux-ci.

11. Réseau de câbles de communication selon l'une ou plusieurs des revendications 1 à 10, **caractérisé en ce que** la ou chaque unité de multiplexage (21) est réalisée de manière modulaire et contient des composants actifs pour un sous-ensemble des abonnés qui sont connectés à l'armoire extérieure (15) associée à l'unité de multiplexage (21).

12. Réseau de câbles de communication selon la revendication 11, **caractérisé en ce qu'**une unité d'alimentation électrique (24) unique et un manchon de câble (27) unique coopèrent avec chaque unité de multiplexage (21) réalisée de manière modulaire et disposée dans la région d'une armoire extérieure (15).

13. Réseau de câbles de communication selon l'une ou plusieurs des revendications 1 à 12, **caractérisé en ce que** la ou chaque unité de multiplexage (21) comporte un filtre VDSL.
